(19) Europäisches Patentamt
European Patent Office
Office européen des brevets

(11) **EP 0 604 108 B1**

(12) **EUROPEAN PATENT SPECIFICATION**

(45) Date of publication and mention
of the grant of the patent:
**15.05.1996 Bulletin 1996/20**

(51) Int. Cl.⁶: **B60C 11/00**, B60C 1/00,
B60C 15/06

(21) Application number: **93310092.7**

(22) Date of filing: **14.12.1993**

(54) **Radial Tyres**

Radiale Luftreifen

Bandages pneumatiques radiaux

(84) Designated Contracting States:
**DE FR GB**

(30) Priority: **14.12.1992 JP 333272/92**

(43) Date of publication of application:
**29.06.1994 Bulletin 1994/26**

(73) Proprietor: **SUMITOMO RUBBER INDUSTRIES, LTD.**
**Chuo-ku Kobe-shi Hyogo-ken (JP)**

(72) Inventors:
• **Saito, Yuichi**
**Kobe-shi, Hyogo-ken (JP)**
• **Kikuchi, Naohiko**
**Akashi-shi, Hyogo-ken (JP)**

(74) Representative: **Stewart, Charles Geoffrey**
**SP TYRES UK LIMITED**
**Technical Division**
**Fort Dunlop, Erdington, Birmingham B24 9QT (GB)**

(56) References cited:
**EP-A- 0 000 458**          **FR-A- 2 154 535**
**US-A- 3 658 108**

• **PATENT ABSTRACTS OF JAPAN vol. 14, no. 228 (M-973)15 May 1990 & JP-A-02 057 410 (OKAMOTO IND.INC.) 17 February 1990**
• **PATENT ABSTRACTS OF JAPAN vol. 16, no. 422 (M-1305)4 September 1992 & JP-A-04 143 104 (SUMITOMO RUBBER IND. LTD.) 18 May 1992**

## Description

The present invention relates to a radial tyre, more specifically a radial tyre which can reduce the fuel consumption of a car.

Recently, global scale environmental problems such as ozone layer depletion, acid rain and the greenhouse effect of the earth, come into question. These problems mostly derive from components in exhaust gases produced in combustion of car fuels such as gasoline. Therefore, reducing the amount of car fuels burnt can be one contributor to effective resolution of these problems.

Accordingly, in North America laws concerning fuel consumption such as the Gas Guzzler Tax and Company Average Fuel Economy (CAFE), for example, are under consideration. Technical developments in view of CAFE include studies for improvement of the efficiency of engines and the like, lowering of the energy loss of each part of a car, lowering the weight of a car, and the like. With respect to the tyres, the above-mentioned problems can be reduced by accomplishing, at the same time, lowering of energy loss in a tyre and lowering of the weight of the tyre.

In order to lower the energy loss of a tyre, several approaches are being employed. For Example, the tan $\delta$ peak temperature of a cap tread can be lowered (Approach 1-1). When the tan $\delta$ peak temperature of a cap tread is lowered, however, the wet grip tends to be lower. Also, for the same purpose, the carbon black content of the cap tread can be lowered (Approach 1-2). When the carbon black content is lowered, however, the wet grip and the dry grip tend to be lower and abrasion resistance also tends to be lower. further, a cap/base structure can be adopted for a tread with the carbon black content of the base tread rubber set lower (Approach 2). When the carbon black content of a base tread rubber is lowered, however, the rigidity of the base tread tends to be lowered which makes the steering stability worse. Still further, in order to lower the energy loss in the sidewall rubber, the carbon black content of the sidewall rubber can be lowered (Approach 3). When the carbon black content of the sidewall rubber is lowered, however, the rigidity of the sidewall tends to be lowered which makes the steering stability of a car worse.

In order to lower the weight of a tyre, the groove depth of the cap tread may be made shallow (Approach 4). When the groove depth is made shallow, however, the tyre life tends to be shortened. Also, for the same purpose, the thickness of the sidewalls may be made small (Approach 5). When the thickness of a sidewall is made small, however, the rigidity of the tyre tends to be deficient which makes the steering stability worse. Further, to lower the weight of the tyre, the volume of the bead apex may be made smaller (Approach 6). When the volume of the bead apex is made smaller, however, the steering stability of a car tends to be worse.

Further, by combining said Approaches 1-1, 2-2 to 6, a tyre which has low energy loss and a low weight can be obtained to realise the lowering of fuel consumption of a car. However, the tyre is still inferior in steering stability properties such as the grip characteristics and handling response.

Also, there has been proposed a tyre which contains short fibres in components such as the tread base, the sidewall and/or the bead filler to improve the steering stability of the car (JP-A-204637/1984, JP-A-204638/1984, JP-A-25605/1986, JP-A-263104/1988).

However, such a tyre cannot realise lowering of energy low and the lowering of weight.

The present invention has an object in solving the above problems, and provides a radial tyre which has a low energy loss, has a low weight and provides excellent steering stability on a car.

According to the present invention a radial tyre comprises:

(A) a cap tread comprising a rubber composition which has a tan $\delta$ peak temperature measured after vulcanisation of not lower than -30°C,

(B) a base tread comprising a rubber composition containing, per 100 parts (part by weight, hereinafter the same), of a rubber component, not more than 30 parts of a carbon black which has an iodine adsorption number of from 30 to 90mg/g, and not less than 10 parts of a short fibre, the short fibre being oriented in substantially the axial direction (hereinafter referred to as the "axial direction") of the tyre,

(C) a sidewall comprising a rubber composition containing, per 100 parts of a rubber component, not more than 30 parts of a carbon black which has an iodine adsorption number of form 30 to 90mg/g and not less than 10 parts of a short fibre, the short fibre being oriented in the peripheral direction of the tyre, and

(D) a bead apex comprising a rubber composition containing, per 100 parts of a rubber component, not less than 65 parts of a carbon black which has an iodine adsorption number of from 60 to 100mg/g and not less than 20 parts of a short fibre, the short fibre being oriented in the axial direction of the tyre or a direction which crosses the axial direction.

Some embodiments of the invention will now be described by way of example only, in conjunction with the attached diagrammatic drawings in which:

Figure 1 is a schematic perspective view showing short fibres oriented in a base tread in the axial direction of a tyre;

Figure 2 is a schematic perspective view showing short fibres oriented in a sidewall in the peripheral direction of a tyre;

Figure 3 is a flow chart showing a manufacturing process for a base tread and a sidewall; and

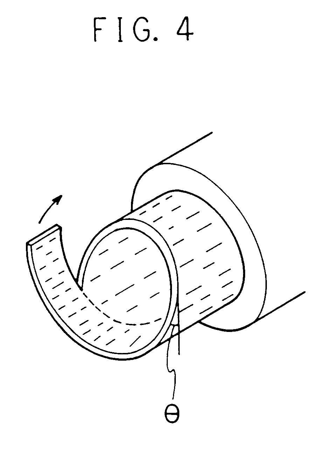

Figure 4 is a schematic perspective view showing a method for cutting out a base tread from a tubular extruded article.

The radial tyre according to the present invention is a tyre having features in a cap tread, a base tread, a sidewall and a bead apex.

The cap tread comprises a rubber composition have a tan δ peak temperature measured after vulcanisation of not lower than -30°C, more preferably from -30°C to -10°C. The balance between rolling resistance and wet grip varies depending on the tan δ peak temperature. If the tan δ peak temperature is lower than -30°C, the rolling resistance tends to be small while the wet grip tends to be worse.

The rubber component of the rubber composition is not particularly limited but a solution-polymerised SBR is preferable because of its nature which further lowers the rolling resistance and improves wet grip. The rubber composition usually contains, per 100 parts of rubber components, 40 to 80 parts of carbon black, 1 to 40 parts of oil, 1 to 3 parts of wax, 1 to 3 parts of rubber antioxidant, 1 to 3 parts of sulfur and 1 to 2 parts of accelerator.

Standard blends are used directed to excellent grip characteristics, low rolling resistance and the like.

The thickness of the cap tread is usually 5 to 9mm.

The rubber composition of the base tread of the tyre according to the present invention contains, per 100 parts of a rubber component, not more than 30 parts, more preferably 5 to 30 parts, of a carbon black having an iodine adsorption number of from 30 to 90mg/g, more preferably from 30 to 70mg/g. If the iodine adsorption number is lower than 30mg/g, the steering stability of a car tends to be poor. If more than 90mg/g, the rolling resistance is increased. If the carbon black content is more than 30 parts, the rolling resistance is worse.

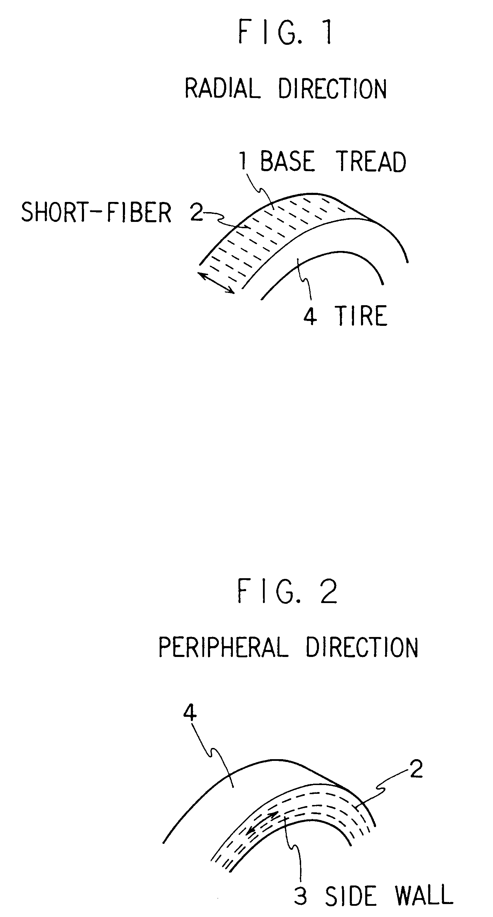

The rubber composition of the base tread of the tyre according to the present invention further contains, per 100 parts of rubber component, not less than 10 parts, more preferably 10 to 30 parts, of a short fibre. As shown in Figure 1 the short fibre 2 is oriented in the base tread 1 in the axial direction of the tyre 4. Here, "the axial direction" means the direction crossing the peripheral direction of the tyre substantially at a right angle. If the short fibre content is lower than 10 parts, there is a tendency for the modulus of elasticity in the axial direction to be too low. and the transverse rigidity is lower to make the steering stability of a car too poor and to make the rolling resistance higher. If the orientation direction of the short fibres is a direction which is not the axial direction of the tyre, for example the peripheral direction of the tyre, the steering stability of a car and the rolling resistance are not improved. For the short fibre, a short fibre grafted into natural rubber, such as UBEPOL-HE 0100 (available from UBE Industries Limited), i.e. nylon-6 having an average diameter of 0.3μm and an average length of 300μm, can be used.

The rubber composition of the base tread of the tyre according to the invention usually contains, per 100 parts of rubber component, not more than 30 parts of the carbon blacks in total (a carbon black having an iodine adsorption number outside the range from 30 to 90mg/g may be included as part), 0-10 parts of oil, 0 to 2 parts of wax, 0 to 3 parts of rubber antioxidant, 1 to 3 parts of sulfur and 1 to 2 parts of accelerator.

The thickness of the base tread is usually approximately 1 to 5mm. The total thickness of the base tread and the cap tread is usually approximately 10mm.

The base tread used in the present invention can be manufactured, for example, by the following method.

Manufacturing method 1 for the base tread

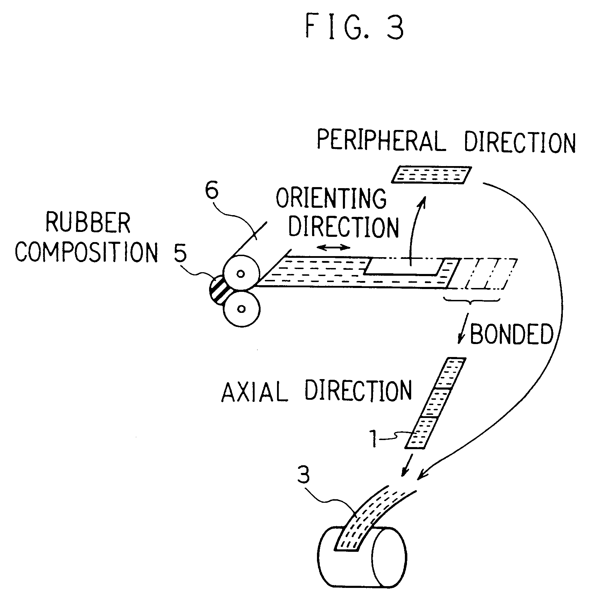

A mixture of rubber component, carbon black, short fibre and other additives is mixed in a Banbury mixer to prepare rubber composition for the base tread. This rubber composition 5 is rolled in a calender roll 6 to make a sheet having a thickness of 1 to 6mm as shown in Figure 3. When the fibre is oriented in the axial direction, sheet pieces each having a longitudinal direction which is at a right-angle to the rolling direction are cut out and joined to a prescribed length to make a base tread as shown in Figure 3.

Manufacturing method 2 for the base tread

The same rubber composition for a base tread as prepared in Manufacturing method 1, is extruded with an extruder to obtain a tube. In this process, the short fibre is oriented in a direction which is parallel to the longitudinal direction of the tube. A sheet piece is cut from the tube in a spiral manner at a prescribed angle θ (with respect to the perpendicular direction to the axis of the tube) to obtain a base tread. If the diameter of the tube is great enough and consequently the cutting angle θ is so small, the resultant base tread is one in which the short fibre is oriented in the axial direction.

The rubber composition of the sidewalls of the tyre according to the present invention contain, per 100 parts of rubber component, not more than 30 parts, more preferably 1`0 to 30 parts of a carbon black having an iodine adsorption number of from 30 to 90mm/g, preferably from 30 to 70mg/g. If the iodine adsorption number is lower than 30mg/g, the steering stability of a car tends to be poor. If more than 90mg/g, the rolling resistance tends to be increased. If the carbon black content is more than 30 parts, the rolling resistance tends to increase.

The rubber composition of the sidewall of the tyre according to the present invention further contains, per 100 parts of rubber component, not less than 10 parts, preferably 10 to 30 parts of short fibres.

As shown in Figure 2, the short fibres 2 are oriented in a sidewall 3 in the peripheral direction of a tyre 4. If the short fibre content is lower than 10 parts, the steering stability tends to be poor. If the orientation direction of the short fibre is a direction which is not the peripheral direction of the tyre, for example the axial direction of the tyre, the steering stability of a car is not improved. For short fibre, the above-described UBEPOL-HE 0100 (available from UBE Industries Limited) or the like can be used.

The rubber composition of the sidewall of the tyre according to the present invention usually contains, per 100 parts of a rubber component, not more than 30 parts of carbon blacks in total (a carbon black having an iodine adsorption number of outside the range from 30 to 90mg/g may be included as part), 0 to 10 parts of oil, 1 to 3 parts of wax, 2 to 5 parts of rubber antioxidant, 1 to 3 parts of sulfur and 1 to 2 parts of accelerator.

The thickness of the sidewall is usually approximately 1 to 5mm.

A sheet having a longitudinal direction which is the rolling direction and having a prescribed length can be cut out in the same manner as in Manufacturing method 1 for the base tread to obtain a sidewall as shown in Figure 3. Alternatively the sidewall can be manufactured by using an extruder in the usual manner. The sidewall is preferably manufactured by the ORBI method. In the ORBI method an extruder produces an extrudate in the form of a string which is wound to form the sidewall region. The ORBI method is a preferable method, because no separation in the joints occurs since there is no joint, and the sidewall is formed uniformly on its periphery. In a conventional method in which the sidewall is extruded as one body and shaped up, for example, the green-strength in the peripheral direction is high and consequently the joint parts may separate in the inflation step to shape the tyre.

The rubber composition of the bead apex of the tyre according to the present invention contains, per 100 parts of rubber component, not less than 65 parts, preferably 65 to 100 parts of a carbon black having an iodine adsorption number of from 60 to 100mg/g, preferably from 60 to 90mg/g. If the iodine adsorption number is lower than 60mg/g, the steering stability of a car tends to be poor. If more than 100mg/g, the extrusion tends to be difficult. If the carbon black content is less than 65 parts, the steering stability tends to be worse.

The rubber composition of the bead apex of the tyre according to the present invention further contains, per 100 parts of rubber component, not less than 20 parts, preferably 20 to 50 parts of short fibres. The short fibres are oriented in the bead apex in the axial direction of the tyre or a direction which crosses the axial direction of the tyre. Here, "a direction which crosses the axial direction" means the direction where the crossing angle with respect to the axial direction is ±30 to 60°, preferably ±45°. If the short fibre content is lower than 20 parts, the steering stability of a car tends to be poor. If the orientation direction of the short fibres is a direction which is neither the axial direction of the tyre nor a direction which crosses the axial direction, for example the peripheral direction of the tyre, the steering stability of a car is not improved. For the short fibres the above-mentioned UBEPOL-HE 0100 (available from UBE Industries Limited) or the like can be used.

The rubber composition of the bead apex of the tyre according to the invention usually contains, per 100 parts of rubber component, 50 to 80 parts of carbon blacks in total (a carbon black having an iodine adsorption number of outside the range from 30 to 100mg/g may be included), 0 to 5 parts of oil, 0 to 2 parts of wax, 0 to 3 parts of rubber antioxidant, 2 to 6 parts of sulfur and 2 to 5 parts of accelerator.

The height of the bead apex is usually approximately 10 to 70mm.

The radial tyre according to the present invention is produced by the conventional production process. First, unvulcanised rubber is obtained by blending and mixing. Then a green tyre is formed from the unvulcanised rubber by using processes such as calendering, topping and extrusion. Subsequently, the green tyre is vulcanised to provide the radial tyre.

The radial tyre according to the present invention is especially suitable for passenger cars and commercial vehicles.

The present invention is more specifically described and explained by means of the following Products Examples and Examples. The present invention however is not limited to the Examples. Testing methods and description formulae of the results in the Products Examples are listed below.

Rolling resistance

Rolling resistance was measured by using a uniaxial drum tester under conditions of an inner pressure of a tyre of 2.5kgf, a load of 350kgf and a speed per hour of 80km/h. The result is described in terms of a relative value (index) to "100" of the reference tyre. When the index is low, the rolling resistance is excellent.

Steering response and Grip characteristic (Steering stability

Four tyres to be tested were fitted to the four wheels of a domestic 1600cc FF passenger car, and the steering stability of the car was evaluated on the Okayama Test Course owned by Sumitomo Rubber Industries Limited. The steering response is represented by the response of the car to steering operation when running straight. The grip characteristic is represented by a boundary speed or behaviour when the car began to slide due to centrifugal force when cornering. Each result is classified to five stages and is shown in terms of a relative point score to "3" of a reference tyre. The larger the point score the better. In the Tables a "+" mark attached to the right shoulder of a figure means being somewhat superior.

Wet braking

Four tyres to be tested were fitted to the four wheels of the same passenger car as used in the steering stability test. Water was sprinkled over the asphalt road surface of the above-mentioned Okayama Test Course. The car ran on the asphalt road at 40km/h, and then the brake stopping distance was measured. The wet brake μ was calculated according to the following equation:

$$\mu = \frac{v^2}{2gl}$$

v = initial speed

g = gravitational acceleration

l = brake stopping distance

The result is shown in terms of a relative value (index) to "100" for a reference tyre. The larger the index the better.

Ride comfort

The four tyres to be tested were fitted to four wheels of the same passenger car as used in the steering stability test. The shock feeling, dumping and hardness feeling were evaluated on various road surfaces (stone pavement road, uneven road, repaired road) of the above-mentioned Okayama Test Course. The result is shown in the same manner as in the steering stability test.

The compositions of the components other than the characteristic components prepared in Production Examples are shown in Table 1.

Table 1

| | Cap-tread | Base-tread | Sidewall | Bead-apex |
|---|---|---|---|---|
| NR | 40 | 60 | 45 | 100 |
| BR | - | 40 | 55 | - |
| SBR*1 | 30 | - | - | - |
| SBR*2 | 30 | - | - | - |
| FEF | - | - | 40 | - |
| N-351 | 45 | - | - | - |
| HAF | - | 35 | - | 70 |
| Thermosetting resin*3 | - | - | - | 15 |
| Aromatic oil | - | 5 | 5 | - |
| Phenol resin | - | 3 | - | 3 |
| Wax | 1.5 | 1.5 | 2 | - |
| Rubber antioxidant 6PPD | 1.5 | 2 | 3 | - |
| Stearic acid | 2 | 2 | 2 | 2 |
| Zinc oxide | 3 | 4 | 3 | 5 |
| Sulfur | 1.75 | 2 | 1.5 | 3 |
| Accelerator CZ | 1.0 | 1.3 | 1 | 3.8 |
| Retarder PVI | - | - | - | 0.4 |

*1 Solution-polymerised SBR: Bonded styrene content is 15% by weight , vinyl content
is 57% by mole
*2 Solution-polymerised SBR: Bonded styrene content is 15% by weight, vinyl content
is 45% by mole
*3 PR12686 resin

PRODUCTION EXAMPLE 1
(Cap tread)

A cap tread rubber composition was prepared by mixing a mixture of 60 parts of a solution-polymerised styrene-butadiene rubber (SBR) (bonded styrene content 15% by weight, a vinyl content of 30% by mole), 40 parts of natural rubber (NR), 60 parts of N351 (carbon black), 25 parts of aromatic oil, 1.5 parts of wax, 1.5 parts of rubber antioxidant 6PPD, 2 parts of stearic acid, 3 parts of zinc oxide, 1.75 parts of sulfur and 1.5 parts of accelerator CZ, in a Banbury mixer. Then a base tread rubber composition was prepared using the composition described in Table 1. These rubber compositions were co-extruded so that the upper layer was the cap tread composition and the lower layer was the bas tread composition, to obtain a tread of a cap tread/base tread 2-layer structure. Using this tread and sidewalls and bead apexes of which the respective compositions were as shown in Table 1, forming and vulcanisation were carried out to obtain a radial tyre A (185/65 R14). The radial tyre corresponded to a DUNLOP SP7 (available from Sumitomo Rubber Industries Limited) except for the compositions of the cap tread, the base tread, the sidewall and the bead apex. the rolling resistance (RR) and the wet brake of this radial tyre A were tested. Further a rubber piece was cut from the cap tread and the tan δ peak temperature of the piece was measured.

The composition and the tan δ peak temperature (Tp (°C)) of the cap tread and the test results of the radial tyre A are shown in Table 2.

Radial tyres B, C and D were produced in the same process as the above-described process using the same composition for the cap tread rubber except that the rubber component and the carbon black component were changed as shown in Table 2. The tan δ peak temperatures of the respective cap treads and the rolling resistances and the wet brakes of the respective radial tyres were tested. The results are shown in Table 2.

The radial tyre D was one having a standard wet grip characteristic. The test results for the rolling resistance the wet braking of the other radial tyres to D are shown in relative values (indices) to that of the radial tyre D.

Table 2

|  | A | B | C | D |
|---|---|---|---|---|
| SBR*1 | 60 | 60 | - | - |
| SBR*2 | - | - | 60 | 50 |
| SBR*3 | - | - | - | 35 |
| NR | 40 | 40 | 40 | 15 |
| N351 | 60 | 55 | - | 60 |
| SAF | - | - | 42 | - |
| Tp(°C) | -40 | -43 | -32 | -24 |
| RR (index) | 83 | 81 | 91 | 100 |
| Wet brake (index) | 92 | 91 | 98 | 100 |

*1 Solution-polymerised SBR: bonded styrene content is 15% by weight, vinyl content is 30% by mole.
*2 Solution-polymerised SBR: bonded styrene content is 15% by weight, vinyl content is 57% by mole.
*3 Solution-polymerised SBR: bonded styrene content is 29% by weight, vinyl content is 40% by mole.

Table 2 shows that when the tan δ peak temperature of the cap tread after vulcanisation was lower than -30°C, the wet grip became worse while the rolling resistance was lowered.

PRODUCTION EXAMPLE 2
(Base tread)

A base tread rubber composition was prepared by mixing a mixture of 70 parts of natural rubber, 30 parts of butadiene rubber (BR), 15 parts of short fibre material (a short fibre component in UBEPOL-HE 0100), 10 parts of FEF, 5 parts of an aromatic oil, 3 parts of phenol resin, 1.5 parts of wax, 2 parts of rubber antioxidant, 2 parts of sulfur and 1.3 parts of accelerator CZ, in a Banbury mixer. Also, a cap tread rubber composition was prepared using the composition described in Table 1. When no short fibre was blended or the short fibre was oriented in the peripheral direction of the tyre, the above-described rubber compositions were co-extruded so that the upper layer was the cap tread composition and the lower layer was the base tread composition, to obtain a tread of cap tread/base tread 2-layer structure. When the short fibre was oriented in the axial direction of the tyre, a cap tread was extruded, separately therefrom, the base tread was cut out from a calendered sheet, and they were placed together as an assembly. Using this tread and the sidewalls and the bead apexes, the respective compositions of which are shown in Table 1, forming and vulcanisation were carried out to obtain the radial tyre (A) (185/65R14). The radial tyre (A) corresponded to a DUNLOP SP7 (available from Sumitomo Rubber Industries Limited) except for the cap tread, the base tread, the sidewall and the bead apex. The rolling resistance (RR) and the steering stability (handling response) of this radial tyre (A) were tested.

The composition of the base tread rubber and the orientation direction of the short fibres in the base tread and the test results of the radial tyre (A) are shown in Table 3.

Radial tyres (B) to (I) were produced by the same process as the above-described process using the same composition for the base tread rubber except that the rubber component, the carbon black component and the short fibre component and the orienting direction of the short fibre were changed as shown in Table 3. Here, the iodine adsorption numbers of the respective carbon blacks are as follows: FEF 43mg/g, HAF 82mg/g, ISAF 121mg/g. ISAF is not a carbon black which is used in the present invention. The rolling resistance and the steering stability (handling response) of the respective radial tyres were tested. The results are shown in Table 3.

The radial tyre (B) had a standard rolling resistance and steering stability. the test results for rolling resistance and the steering stability (handling response) of the other radial tyres than the radial tyre (B) are shown in relative values (indices) to that of the radial tyre (B).

Table 3

| | (A) | (B) | (C) | (D) | (E) | (F) | (G) | (H) | (I) |
|---|---|---|---|---|---|---|---|---|---|
| NR*2 | 70 | 70 | 70 | 70 | 70 | 70 | 70 | 70 | 70 |
| BR | 30 | 30 | 30 | 30 | 30 | 30 | 30 | 30 | 30 |
| FRR*1 | 15 | - | 25 | 15 | 15 | 6 | 15 | 15 | 15 |
| Orienting direction | Axial direction | - | Axial direction | Axial direction | Axial direction | Axial direction | Axial direction | Axial direction | Peripheral direction |
| FEF | 10 | | 10 | 25 | | 10 | 35 | | 10 |
| HAF | | 35 | | | 10 | | | | |
| ISAF | | | | | | | | 10 | |
| RR | 93 | 100 | 95 | 97 | 98 | 91 | 103 | 105 | 93 |
| Steering stability (handling response) | 3.5 | 3 | 3.5 | 3+ | 3.5+ | 2.5 | 3.5 | 3.5+ | 2.5 |

*1 Short fibre component in UBEPOL-HE 0100
*2 Natural rubber in UBEPOL-HE 0100 is included

Table 3 shows the following facts: FEF improves the steering stability more than HAF; when the short fibre content is lower than 10 parts, the steering stability is lowered; when the carbon black content is higher than 30 parts, the rolling resistance becomes worse (increases); when the iodine adsorption number of the carbon black is higher than 90mg/g, the rolling resistance becomes worse; when the orientation direction of the short fibres is the peripheral direction of the tyre, the steering stability (handling response) becomes worse.

PRODUCTION EXAMPLE 3
(Sidewall)

A sidewall rubber composition was prepared by mixing a mixture of 45 parts of natural rubber, 55 parts of butadiene rubber, 15 parts of a short fibre (short fibre component in UBEPOL-HE 0100), 20 parts of FEF, 5 parts of aromatic oil, 2 parts of was, 3 parts of rubber antioxidant 6PPD, 2 parts of stearic acid, 3 parts of zinc oxide, 1.5 parts of sulfur and 1 part of accelerator CZ, in a Banbury mixer. The rubber composition was extruded into a prescribed form by an extruder to obtain a sidewall. Using the sidewalls and the cap tread, the base tread and the bead apexes of which the respective compositions are shown in Table 1, forming and vulcanisation was carried out to obtain a radial tyre (1) (185/65R14). The radial tyre (1) corresponded to a DUNLOP SP7 (available from Sumitomo Rubber Industries Limited) except for the cap tread, the base tread, the sidewall and the bead apex. The rolling resistance (RR) and the steering stability (handling response) of this radial tyre were tested.

The composition of the sidewall rubber and the orientation direction of the short fibres in the sidewalls and the test results of the radial tyre (1) are shown in Table 4.

Radial tyres (2) to (8) were produced by the same process as the above-described process using the same composition for the sidewall rubber except that the rubber component, the carbon black component and the short fibre component and the orienting direction of the short fibres were changed as shown in Table 4. The rolling resistance and the steering stability (handling response) of the respective radial tyres were tested. The results are shown in Table 4.

The radial tyre (4) is that having a standard rolling resistance and steering stability. The test results of the rolling resistance and the steering stability (handling response) of the other radial tyres than the radial tyre (4) are shown in relative values (indices) to that of the radial tyre (4).

Table 4

| | (1) | (2) | (3) | (4) | (5) | (6) | (7) | (8) |
|---|---|---|---|---|---|---|---|---|
| NR*2 | 454 | 45 | 45 | 45 | 45 | 45 | 45 | 45 |
| BR | 55 | 55 | 55 | 55 | 55 | 55 | 55 | 55 |
| FRR*1 | 15 | 15 | 15 | - | - | 10 | 20 | 5 |
| Orienting direction | Peripheral direction | Peripheral direction | Axial direction | - | - | Peripheral direction | Peripheral direction | Peripheral direction |
| FEF block | 20 | 10 | 20 | 50 | 40 | 20 | 10 | 30 |
| RR | 95 | 95 | 100 | 100 | 95 | 99 | 100 | 100 |
| Handling response | 3.5 | 3⁺ | 2.5 | 3 | 2.5 | 3 | 3.5 | 3⁻ |
| Ride comfort | 3⁺ | 3.5 | 3 | 3 | 3.5 | 3⁺ | 3 | 3 |

*1 Nylon short fibre component in UBEPOL-HE0100
*2 Natural rubber in UBEPOL-HE 0100 is included

Table 4 shows that when the short fibre is oriented in the axial direction of tyre, the steering stability handling response) becomes worse. The radial tyre (8) is somewhat inferior to the reference tyre (4) in the handling response since the amount of the short fibre is as small as 5 parts.

PRODUCTION EXAMPLE 4
(Bead apex)

A bead apex rubber composition was prepared by mixing a mixture of 100 parts of natural rubber, 30 parts of a short fibre (a short fibre component in UBEPOL-HE 0100), 70 parts of HAF, 15 parts of R12686-resin (thermosetting resin) (available from Sumitomo Dyurez Kabushiki Kaisha), 3 parts of phenol resin (tackifier), 2 parts of stearic acid, 5 parts of zinc oxide, 3 parts of sulfur, 3.8 parts of accelerator CZ and 0.4 parts of Retarda PVI, in a Banbury mixer. The rubber composition was extruded into a prescribed form by an extruder to obtain a bead apex. Using the obtained bead apexes and the cap tread, the base tread and the sidewalls of which the respective compositions are shown in Table 1, forming and vulcanisation were carried out to obtain a radial tyre 1 (185/65R14). The radial tyre 1 corresponded to a DUNLOP SP7 (available from Sumitomo Rubber Industries Limited) except the cap tread, the base tread, the sidewalls and the bead apex. The rolling resistance and the steering stability (handling response) of this radial tyre were tested.

The composition of the bead apex rubber and the orientation direction of the short fibres in the bead apex and the test results of the radial tyre 1 are shown in Table 5.

Radial tyres 2 and 3 were produced by the same process as the above-described process using the same composition for the bead apex rubber except that the rubber component, the carbon black component and the short fibre composition and the orienting direction of the short fibre were changed as shown in Table 5. The rolling resistance and the steering stability (handling response) of the respective radial tyres were tested. The results are shown in Table 5.

The radial tyre 3 is that having a standard rolling resistance and steering stability. The test results of the rolling resistance and the steering stability of the other radial tyres than the radial tyre 3 are shown in relative values (indices) to that of the radial tyre.

Table 5

|  | 1 | 2 | 3 |
|---|---|---|---|
| NR*3 | 100 | 100 | 100 |
| FRR*1 | 30 | 30 | - |
| Orienting direction | Axial direction | Cross direction (±45°) | - |
| HAF | 70 | 70 | 70 |
| Thermosetting resin*2 | 15 | 15 | 15 |
| RR | 100 | 100 | 100 |
| Handling response | 3⁺ | 3.5 | 3 |

*1 Nylon short fibre component in UBEPOL-HE 0100
*2 PR12686-resin
*3 Natural rubber in UBEPOL-HE 0100 is included

Table 5 shows that when the short fibre is oriented in the bead apex in the axial direction or a direction which crosses the axial direction of the tyre, the steering stability (handling response) is improved.

EXAMPLE 1

Using composition $T_B$ for the cap tread shown in Table 6, mixing and extrusion were carried out to obtain a cap tread. Here, the iodine adsorption number of carbon black N-351 was 68mg/g. The tan $\delta$ peak temperature of the cap tread rubber was measured to find it is -24°C.

Using composition $B_B$ for the base tread shown in Table 6, mixing and extrusion were carried out to obtain a base tread.

Using composition $S_B$ for the sidewall shown in Table 6, mixing and extrusion were carried out to obtain a sidewall.

Using composition $A_B$ for the bead apex shown in Table 6, mixing and extrusion were carried out to obtain a bead apex.

Using the obtained cap tread, base tread, sidewalls and bead apexes, forming and vulcanisation were carried out to obtain a radial tyre (185/65R14).

The radial tyre corresponded to a DUNLOP SP7 (available from Sumitomo Rubber Industries Limited) except for those four construction parts. The short fibres were oriented in the axial direction in the base tread, in the peripheral direction in the sidewall, and in the axial direction in the bead apex. The construction of the tyre is summarised in Table 7.

This radial tyre was weighed, and the rolling resistance, the grip characteristic (steering stability), the handling response (steering stability) and the ride comfort of the tyre were tested.

The results are shown in Table 7.

The sizes of the respective constructional parts are shown in Table 8.

EXAMPLES 2 AND 3

The same tyre was obtained in the same manner as in EXAMPLE 1 except that compositions for the cap tread, for the base tread, for the sidewall and for the bead apex shown in Table 7 were used. The same tests as those of EXAMPLE 1 were carried out on the resultant tyre. The results are shown in Table 7. The sizes of the respective constructional parts are shown in Table 8.

COMPARATIVE EXAMPLES 1 TO 3

The same radial tyres as those of EXAMPLE 1 were obtained, except that the compositions shown in Table 6 and constructions shown in Table 7 were used.

These radial tyres were weighed and the rolling resistance, the grip characteristics, the handling response and the ride comfort of the tyres were tested. The results are shown in Table 7.

The radial tyre of COMPARATIVE EXAMPLE 3 was that having a standard rolling resistance. The test results for the rolling resistance of the other radial tyres than the radial tyre of COMPARATIVE EXAMPLE 3 are shown in relative values (indices) to that of the radial tyre of COMPARATIVE EXAMPLE 3.

The sizes of the respective construction parts are shown in Table 8.

Table 6

| | Composition for cap tread | | | Composition for base tread | | Composition for sidewall | | | Composition for bead apex | |
|---|---|---|---|---|---|---|---|---|---|---|
| | TA | TB | TC | BA | BB | SA | SB | SC | AA | AB |
| NR*10 | 40 | 15 | 40 | 60 | 60 | 45 | 45 | 45 | 100 | 100 |
| BR | – | – | – | 40 | 40 | 55 | 55 | 55 | – | – |
| SBR*1 | 30 | 50 | – | – | – | – | – | – | – | – |
| SBR*2 | 30 | – | – | – | – | – | – | – | – | – |
| SBR*3 | – | – | 60 | – | – | – | – | – | – | – |
| SBR*4 | – | 35 | – | – | – | – | – | – | – | – |
| FRR*5 | – | – | – | – | 15 | – | 15 | – | – | 30 |
| FEF*6 | – | – | – | – | 10 | 40– | 20 | 50 | – | – |
| N-351*7 | 45 | 60 | 45 | – | – | – | – | – | – | – |
| HAF*8 | – | – | – | 35 | – | – | – | – | 70 | 70 |
| Thermosetting resin*9 | – | – | – | – | – | – | – | – | 15 | 15 |
| Aromatic oil | – | 20 | 0 | 5 | – | 5 | – | – | – | – |
| Phenol resin (Tackifier) | – | – | – | 3 | – | – | – | – | 3 | – |

Table 6 cont'd

| | | | | | | | | | |
|---|---|---|---|---|---|---|---|---|---|
| Wax | 1.5 | 1.5 | 1.5 | 1.5 | - | 2 | - | - | - | - |
| Rubber antioxidant 6PPD | 1.5 | 1.5 | 1.5 | 2 | - | 3 | - | - | - | - |
| Stearic acid | 2 | 2 | 2 | 2 | - | 2 | - | - | 2 | - |
| Zinc oxide | 3 | 3 | 3 | 4 | - | 3 | - | - | 5 | - |
| Sulfur | 1.75 | 1.75 | 1.75 | 2 | - | 1.5 | - | - | 3 | - |
| Accelerator CZ | 1.0 | 1.0 | 1.0 | 1.3 | - | 1 | - | - | 3.8 | - |
| Retarda PVI | - | - | - | - | - | - | - | - | 0.4 | - |

*1    Solution-polymerised SBR: bonded styrene content is 15% by weight, vinyl content is 57% by mole
*2    Solution-polymerised SBR: bonded styrene content is 15% by weight, vinyl content is 45% by mole
*3    Solution-polymerised SBR: bonded styrene content is 21% by weight, vinyl content is 63% by mole
*4    Solution-polymerised SBR: bonded styrene content is 29% by weight, vinyl content is 40% by mole
*5    Nylon short fibre component in UBEPOL-HE 0100
*6    Iodine adsorption number is 43mg/g
*7    Iodine adsorption number is 68mg/g
*8    Iodine  adsorption number is 82mg/g
*9    PR12686 resin
*10   Natural rubber in UBEPOL-HE0100 is included

## Table 7

|  | | Example 1 | Comparative Example 1 | Comparative Example 2 | Comparative Example 3 | Example 2 | Example 3 |
|---|---|---|---|---|---|---|---|
| Cap tread composition | | $T_B$ directed to grip | $T_A$ directed to LRR | $T_A$ directed to LRR | $T_B$ directed to grip | $T_C$ directed to grip | $T_C$ directed to grip |
|  | Tan δ peak temperature (° C) | -24 | -35 | -35 | -24 | -12 | -12 |
| Base tread composition | | $B_B$ | $B_A$ | $B_B$ | - | $B_B$ | $B_B$ |
|  | iodine adsorption number (mg/g) | 43 | 82 | 43 | - | 43 | 43 |
|  | phr | 10 | 35 | 10 | - | 10 | 10 |
|  | orientation direction of short fibre | axial direction | - | axial direction | - | axial direction | axial direction |
|  | phr | 15 | - | 15 | - | 15 | 15 |

EP 0 604 108 B1

EP 0 604 108 B1

Table 7 cont'd

| | | $S_B$ | $S_A$ | $S_B$ | $S_C$ | $S_B$ | $S_B$ |
|---|---|---|---|---|---|---|---|
| Sidewall composition | | | | | | | |
| | iodine adsorption number (mg/g) | 43 | 43 | 43 | 43 | 43 | 43 |
| | phr | 20 | 40 | 20 | 50 | 20 | 20 |
| | orientation direction of short fibre | peripheral direction | - | peripheral direction | - | peripheral direction | peripheral direction |
| | phr | 15 | - | 15 | - | 15 | 15 |
| Bead apex composition | | $A_B$ | $A_A$ | $A_B$ | $A_A$ | $A_B$ | $A_B$ |
| | iodine adsorption number mg/g | 82 | 82 | 82 | 82 | 82 | 82 |
| | phr | 70 | 70 | 70 | 70 | 70 | 70 |
| | orientation direction of short fibre | axial direction | - | axial direction | - | axial direction | cross direction |
| | phr | 30 | - | 30 | - | 30 | 30 |

14

Table 7 cont'd

| | | | | | | |
|---|---|---|---|---|---|---|
| Weight g | 6.0 | 6.0 | 6.0 | 8.0 | 6.0 | 6.0 |
| RR | 63 | 64 | 60 | 100 | 64 | 64 |
| Grip characteristic | 3 | 2.5 | 2.5 | 3 | 3.5 | 3.5 |
| Handling response | 3 | 2.7 | 2.9 | 3 | 3+ | 3.5 |
| Ride comfort | 3 | 2.9 | 3 | 3 | 3 | 3+ |

Table 8

| | Example 1 | Example 2 | Example 3 | Comparative Example 1 | Comparative Example 2 | Comparative Example 3 |
|---|---|---|---|---|---|---|
| Thickness of tread (mm) | 10 | 10 | 10 | 10 | 10 | 10 |
| Thickness of sidewall (mm) | 1.5 | 1.5 | 1.5 | 2.5 | 1.5 | 3.5 |
| Height of bead apex (mm) | 25 | 25 | 25 | 30 | 25 | 45 |

In Table 6, $T_A$, $B_A$, $S_A$, $S_C$, $A_A$ are conventional ordinary compositions.

From the results of EXAMPLES 1 to 3 and COMPARATIVE EXAMPLES 1 to 3, the following facts can be recognised. The radial tyres according to the present invention are light, have very low rolling resistance, can provide excellent steering stability and ride comfort.

As explained above, since the radial tyre according to the present invention is light and has a low rolling resistance, a car fitted with the tyre is improved in fuel consumption. further, since the tyre has an excellent steering stability (grip characteristic, handling response), the tyre can ensure safe high speed driving and also can provide excellent ride comfort.

## Claims

1.  A radial tyre comprising:

    (A) a cap tread comprising a rubber composition which has a $\tan \delta$ peak temperature measured after vulcanisation of not less than -30°C,
    (B) a base tread comprising a rubber composition containing, per 100 parts by weight of a rubber component, not more than 30 parts by weight of a carbon black which has an iodine adsorption number of from 30 to 90mg/g and not less than 10 parts by weight of a short fibre, the short fibre being oriented in substantially the axial direction of the tyre,
    (C) a sidewall comprising a rubber composition containing, per 100 parts by weight of a rubber component, not more than 30 parts by weight of a carbon black which has an iodine adsorption number of from 30 to 90mg/g and not less than 10 parts by weight of a short fibre, the short fibre being oriented in the peripheral direction of the tyre, and
    (D) a bead apex comprising a rubber composition containing, per 100 parts by weight of a rubber component, not less than 65 parts by weight of a carbon black which has an iodine adsorption number of from 60 to 100mg/g and not less than 20 parts by weight of a short fibre, the short fibre being oriented in the substantially axial direction of the tyre or a direction which crosses the substantially axial direction.

2.  A radial tyre according to claim 1, wherein said sidewall is formed by the ORBI method consisting in producing an extrudate in the form of a string which is wound to form the sidewall region, no separation in the joints occuring and the sidewall being formed uniformly on its periphery.

## Patentansprüche

1.  Ein Radialreifen mit:

    (A) einer Oberteillauffläche mit einer Gummizusammensetzung, die eine nach Vulkanisation gemessene tan-$\delta$ -Spitzentemperatur von nicht weniger als -30°C aufweist,
    (B) einer Basislauffläche mit einer Gummizusammensetzung, die pro 100 Gewichtsteile einer Gummikomponente nicht mehr als 30 Gewichtsteile eines Kohlenstoffrußes, der eine Jodadsorptionszahl von 30 bis 90 mg/g aufweist, und nicht weniger als 10 Gewichtsteile einer Kurzfaser enthält, wobei die Kurzfaser im wesentlichen in der axialen Richtung des Reifens orientiert ist,
    (C) einer Seitenwand mit einer Gummizusammensetzung, die pro 100 Gewichtsteile einer Gummikomponente nicht mehr als 30 Gewichtsteile eines Kohlenstoffrußes, der eine Jodadsorptionszahl von 30 bis 90 mg/g aufweist, und nicht weniger als 10 Gewichtsteile einer Kurzfaser enthält, wobei die Kurzfaser in der peripheren Richtung des Reifens orientiert ist, und

(D) einem Wulstkernreiter mit einer Gummizusammensetzung, die pro 100 Gewichtsteile einer Gummikomponente nicht weniger als 65 Gewichtsteile eines Kohlenstoffrußes, der eine Jodadsorptionszahl von 60 bis 100 mg/g aufweist, und nicht weniger als 20 Gewichtsteile einer Kurzfaser enthält, wobei die Kurzfaser im wesentlichen in der axialen Richtung des Reifens oder einer Richtung, welche die im wesentlichen axiale Richtung kreuzt, orientiert ist.

**2.** Ein Radialreifen nach Anspruch 1, bei dem die Seitenwand durch das ORBI-Verfahren gebildet ist, welches darin besteht, daß ein Extrudat in Form eines Strangs erzeugt wird, der gewickelt wird, um die Seitenwandregion zu bilden, wobei keine Trennung in den Verbindungen auftritt und die Seitenwand gleichförmig auf ihrer Peripherie gebildet wird.

**Revendications**

**1.** Pneumatique à carcasse radiale, comprenant :

(A) une bande de roulement externe comprenant une composition de caoutchouc ayant une température de crête tg$\delta$ mesurée après vulcanisation qui n'est pas inférieure à -30 °C,

(B) une bande de roulement de base comprenant une composition de caoutchouc qui contient, pour 100 parties en poids d'un élément constituant de caoutchouc, au plus 30 parties en poids de noir de carbone ayant un indice d'adsorption d'iode compris entre 30 et 90 mg/g et au moins 10 parties en poids de fibres courtes, les fibres courtes étant orientées pratiquement dans la direction axiale du pneumatique,

(C) un flanc comprenant une composition de caoutchouc qui contient, pour 100 parties en poids d'un élément constituant de caoutchouc, au plus 30 parties en poids de noir de carbone ayant un indice d'adsorption d'iode compris entre 30 et 90 mg/g et au moins 10 parties en poids de fibres courtes, les fibres courtes étant orientées dans la direction périphérique du pneumatique, et

(D) une pointe de bourrage de talon comprenant une composition de caoutchouc qui contient, pour 100 parties en poids d'un élément constituant de caoutchouc, au moins 65 parties en poids de noir de carbone ayant un indice d'adsorption d'iode compris entre 60 et 100 mg/g et au moins 20 parties en poids de fibres courtes, les fibres courtes étant orientées pratiquement dans la direction axiale du pneumatique ou dans une direction qui recoupe la direction pratiquement axiale.

**2.** Pneumatique à carcasse radiale selon la revendication 1, dans lequel le flanc est formé par le procédé "ORBI" qui comprend la production d'une matière extrudée sous forme d'un filament enroulé pour la formation de la région de flanc, aucune séparation dans les joints n'étant ainsi produite, et le flanc est formé uniformément à sa périphérie.

# F I G. 1

## RADIAL DIRECTION

1 BASE TREAD

SHORT-FIBER 2

4 TIRE

# F I G. 2

## PERIPHERAL DIRECTION

4

2

3 SIDE WALL

# FIG. 3

FIG. 4

θ